Europäisches Patentamt

European Patent Office

Office européen des brevets

(19)

(11) **EP 0 575 220 B1**

(12) **FASCICULE DE BREVET EUROPEEN**

(45) Date de publication et mention
de la délivrance du brevet:
**04.03.1998 Bulletin 1998/10**

(51) Int Cl.⁶: **H04N 5/225**

(21) Numéro de dépôt: **93401449.9**

(22) Date de dépôt: **08.06.1993**

(54) **Caméra d'observation multistandard et système de surveillance utilisant une telle caméra**

Multistandard-Beobachtungskamera und Überwachungssystem damit

Multistandard observation camera and system using such a camera

(84) Etats contractants désignés:
**DE FR GB IT NL SE**

(30) Priorité: **16.06.1992 FR 9207256**

(43) Date de publication de la demande:
**22.12.1993 Bulletin 1993/51**

(73) Titulaire: **THOMSON-CSF**
**75008 Paris (FR)**

(72) Inventeur: **Fouilloy, Jean-Pierre**
**F-92402 Courbevoie Cédex (FR)**

(74) Mandataire: **Lincot, Georges et al**
**THOMSON-CSF-S.C.P.I.,**
**13, Avenue du Président**
**Salvador Allende**
**94117 Arcueil Cédex (FR)**

(56) Documents cités:
**EP-A- 0 148 654**          **EP-A- 0 235 002**
**DE-A- 3 903 091**          **GB-A- 2 152 328**
**GB-A- 2 191 058**          **US-A- 4 942 468**

• **ELECTRONIQUE APPLICATIONS no. 15, 1980, PARIS, FRANCE pages 83 - 87 IM-SAROEUN, PAINDAVOINE ET. AL. 'Base de temps programmable au standard t.v. pour caméra c. c.d.'**
• **PATENT ABSTRACTS OF JAPAN vol. 14, no. 574 (P-1145)20 Décembre 1990 & JP-A-22 45 728**

## Description

Le domaine de l'invention est celui de la prise de vues, notamment dans le domaine infrarouge et se rapporte, plus précisément, aux caméras d'observation destinées à délivrer un signal vidéo à un moniteur de visualisation pour la formation d'images selon le standard adapté à ce moniteur.

L'invention a pour objet une caméra d'observation multistandard dont le signal vidéo de sortie peut être adapté à plusieurs standards de télévision.

L'invention concerne plus particulièrement, mais non exclusivement, les caméras thermiques et peut être utilisée dans les systèmes de surveillance panoramique ou sectorielle.

Pour convertir le flux lumineux provenant d'une scène à observer en un signal vidéo, les caméras thermiques comportent classiquement un détecteur, disposé dans un cryostat, et comportant notamment un grand nombre de capteurs élémentaires ; ces capteurs sont sensibles dans une bande spectrale infrarouge donnée et sont capables de délivrer des charges dont la quantité est proportionnelle à l'éclairement reçu. Un tel capteur est décrit p.ex. dans EP-A-0 148 654. Les charges délivrées sont transmises à un circuit de traitement et de multiplexage ; les transferts des charges dans un tel circuit sont déclenchés par les impulsions d'un séquenceur d'horloges tel que décrit dans EP-A-0 235 002, réglées de façon à former un signal vidéo conforme au standard du moniteur de visualisation.

Les capteurs élémentaires sont disposés selon la direction horizontale de l'image finale, qui est formée à partir du signal vidéo délivré par la caméra et visualisée sur le moniteur.

De manière générale, les capteurs élémentaires sont organisées en plusieurs rangées parallèles à cette même direction horizontale, et le détecteur est associé à un système opto-mécanique de projection et de balayage vertical d'une image de la scène projetée sur le détecteur, tel que décrit dans GB-A-2191058. Le détecteur analyse alors la scène par ligne de trame ou d'image visualisée sur le moniteur, la géométrie de ces lignes étant fixée par le standard de visualisation.

L'organisation des capteurs élémentaires en plusieurs rangées obéit en fait à plusieurs objectifs :

- présenter un nombre suffisant de capteurs dans une longueur de détecteur donnée, par exemple de 6,33 mm ;
- respecter le théorème d'échantillonnage de Shannon concernant la fréquence d'échantillonnage du signal, ce qui nécessite le recouvrement des zones de détection ;
- augmenter la sensibilité du détecteur par accumulation avec retard, selon une méthode connue, des signaux provenant de différentes zones de détection et correspondant à un même point d'image de la scène successivement observée.

Classiquement, deux types d'organisation de rangées existent indépendamment :

- afin de tenir compte du théorème d'échantillonnage, les rangées se présentent décalées selon la direction horizontale, d'une distance égale à la moitié de la dimension d'un capteur selon cette direction et les signaux de sortie sont alors resynchronisés dans le circuit de traitement en synchronisme avec le balayage vertical avec recouvrement partiel des informations de luminance ;
- afin d'augmenter la sensibilité, chaque rangée est répétée plusieurs fois, sans décalage horizontal ; les signaux des capteurs homologues, situés sur une même verticale correspondant à un même point d'image du fait du balayage vertical, sont cumulés en synchronisme avec le balayage dans le circuit de traitement selon le mode connu dit d'Intégration avec Retard, en abrégé TDI (initiales de "Time Delay and Integration" en terminologie anglo-saxonne).

Le problème posé est de disposer d'un équipement de prise de vues qui puisse à la fois répondre aux conditions d'échantillonnage et de sensibilité évoquées afin d'obtenir une image de qualité et être adapté à plusieurs standards de télévision.

Or, les deux premières conditions (échantillonnage et sensibilité) entrainent l'utilisation d'un nombre de rangées assez grand, et la troisième condition (adaptation à plusieurs standards de télévision) suppose que les instants de transfert de charges soient élaborés indépendamment pour chaque rangée et soient différents pour chaque standard, ce qui nécessite d'engendrer un nombre correspondant de signaux d'horloge. Ces signaux étant élaborés dans une "électronique de proximité" disposée à l'extérieur du cryostat, le nombre de connexions vers l'extérieur du cryostat, proportionnel au nombre de rangées, devient très élevé ; de sérieuses difficultés de connectique et de fuites thermiques se posent alors.

De ce fait, la disposition des capteurs en sous-rangées décalées ou répétées n'est rendu compatible jusqu'à présent qu'avec un seul standard et que pour un seul type d'organisation de rangées à l'exclusion de l'autre : la compatibilité au standard est obtenue classiquement en réglant le pas entre rangées sur un sous-multiple entier de l'écartement entre les lignes d'image ou de trames du standard de télévision considéré ; la mise en oeuvre d'un seul type d'organisation de capteurs avec un nombre restreint de rangées permet alors de limiter les problèmes de connexion.

On connaît par exemple une barrette de 288 x 4 capteurs développée par la Société SOFRADIR. Cette barrette a été utilisée en association avec un dispositif de balayage horizontal, direction dans laquelle les standards de télévision ne sont pas quantifiés.

Afin de disposer d'une caméra apte à fournir une image de qualité et adaptable aux principaux standards de télévision, sans que se posent les délicats problèmes de connexion évoqués, il est proposé de réaliser la gestion temporelle des différentes impulsions de commande de l'intégration et des transferts des charges provenant des capteurs par des moyens de comptage situés dans le cryostat, programmables de l'extérieur en fonction des caractéristiques d'un standard choisi, et combinés entre eux en fonction de l'organisation des sous-rangées de capteurs de façon à simplifier la commande de tous ces déplacements de charges.

Plus précisément, l'objet de l'invention concerne une caméra d'observation multistandard comportant

- un détecteur de longueur donnée, photosensible dans une bande spectrale donnée et comprenant des capteurs élémentaires disposés en rangées sur la longueur du détecteur selon une même direction horizontale pour former une structure de type donné,
- un système opto-mécanique de projection et de balayage, pour projeter une image d'une scène observée de largeur sensiblement égale à la longueur du détecteur, dans un plan focal coïncidant avec le plan du détecteur et pour balayer cette image sur le détecteur selon une direction verticale,
- un cryostat dans lequel sont disposés le détecteur et, associé à celui-ci, un circuit de lecture pour délivrer, à partir des charges libérées proportionnellement à l'éclairement reçu par les capteurs, puis transférées et multiplexées par la commande d'un séquenceur d'horloges en synchronisme avec le balayage vertical, un signal vidéo à un moniteur de visualisation ayant un standard de télévision donné, ce standard étant défini par une fréquence de ligne et, pour la TV numérique, par une fréquence d'échantillonnage caractéristique des images visualisées,

la caméra étant caractérisée en ce que le séquenceur d'horloges est disposé dans le cryostat et comporte des moyens de comptage du temps pour définir des périodes d'intégration des charges et des instants de transfert et de multiplexage de ces charges après intégration dans le circuit de lecture, et en ce que ces moyens de comptage sont préréglés par une mémoire disposée à l'extérieur du cryostat et qui contient des instructions de synchronisation des périodes d'intégration, des instants de transfert et de multiplexage avec la fréquence ligne d'un standard de télévision choisi parmi plusieurs standards présélectionnés dans la mémoire et correspondant au standard du moniteur de visualisation.

La caméra selon l'invention peut s'adapter à plusieurs standards de télévision en utilisant un même détecteur. De plus, le pas entre les sous-rangées de capteurs de ce détecteur n'est plus lié par le pas entre les lignes de télévision. Il est alors possible d'adapter le pas entre les rangées aux seules contraintes technologiques, de manière à simplifier la connectique entre le détecteur et l'électronique de proximité.

Dans une forme de réalisation, les moyens de comptage programmables comprennent des compteurs de cycles d'horloge pour définir les périodes d'intégration, couplés à d'autres compteurs pour définir les instants de transfert, les cycles étant définis par la fréquence d'échantillonnage et les compteurs étant déclenchés en synchronisme avec la fréquence ligne du moniteur.

Dans une autre forme de réalisation, les moyens de comptage sont constitués par des mémoires à accumulation appelées également mémoires FIFO (initiales de "First In, First Out" en terminologie anglo-saxonne).

Selon l'invention, les moyens de comptage peuvent recevoir les instructions de programmation à tout instant en fonction du standard choisi par l'opérateur, par exemple à chaque mise en route de la caméra.

La caméra selon l'invention peut être avantageusement utilisée dans un système de surveillance sectoriel ou panoramique.

D'autres avantages et caractéristiques apparaîtront à la lecture de la description qui suit, exposée en référence aux figures annexées qui représentent respectivement :

- la figure 1, la structure schématisée d'une caméra d'observation de type caméra thermique ;
- la figure 2, un schéma synoptique représentant l'agencement selon l'invention de certains éléments matériels d'une telle structure ;
- la figure 3, un exemple de réalisation d'un agencement de capteurs combinant deux types d'organisation ;
- les figures 4a et 4b, deux chronogrammes de périodes et d'instants d'intégration et de transfert des charges de l'exemple de réalisation précédent adapté à deux standards de télévision ;
- la figure 5, une forme de réalisation d'un séquenceur à compteurs programmables ;
- la figure 6, une forme de réalisation d'un séquenceur à mémoires FIFO ;
- les figures 7 et 8, deux types d'organisation connus pour les capteurs élémentaires de détecteurs utilisés et les circuits de traitement associés ;

- les figures 9a à 9d, des chronogrammes de périodes d'intégration des charges des premiers capteurs pour quatre standards de télévision connus ;
- la figure 10, une variante de circuit de traitement pour les charges provenant des capteurs organisés en sous-rangées décalées,
- les figures 11a et 11b, deux types d'organisation combinée de rangées de capteurs.

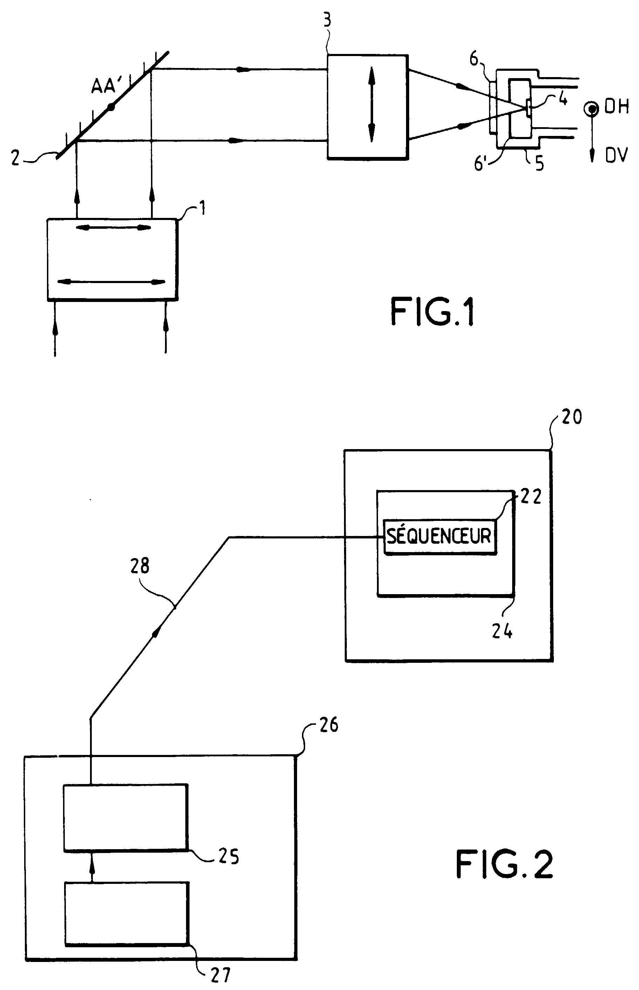

Les caméras thermiques fonctionnent classiquement dans une des bandes spectrales 8 à 12 µm ou 3 à 5 µm, qui est la bande de sensibilité de leur détecteur ; le détecteur a une structure de barrette détectrice à balayage vertical. Un exemple de structure d'une telle caméra est représenté schématiquement sur la figure 1. Sur cette figure, la caméra comporte essentiellement, dans le sens de la propagation de la lumière, un système optique afocal d'entrée 1, dont le grossissement est adapté au champ d'observation désiré, un miroir de balayage vertical 2, un système optique de focalisation 3 et une barrette photosensible 4 enfermée dans une enceinte cryostatique 5 refroidie. Ce cryostat est clos par un hublot 6 transparent aux rayonnements infrarouges dans la bande considérée ; le champ de vue du détecteur est limité par un diaphragme froid 6', encore appelé écran froid, placé à l'intérieur du cryostat.

Un faisceau lumineux provenant de la scène observée est collimaté à l'infini en traversant le système afocal d'entrée 1, puis est réfléchi sur le miroir 2, avant d'être projeté par le système de focalisation 3, sur la barrette 4 afin de former dans le plan de la barrette une image I de la scène observée. L'écran froid 6' peut coïncider avec la pupille de sortie du système de focalisation 3 afin de supprimer les flux parasites de structure.

Le détecteur à balayage vertical est appelé barrette détectrice du fait de sa forme allongée dans le sens horizontal. Il comporte en effet classiquement un grand nombre de capteurs élémentaires, photovoltaïques ou photoconducteurs, disposés selon une ou plusieurs rangées dont la longueur globale conditionne celle de la barrette. Par exemple, des capteurs sensibles dans la bande spectrale 8-12 µm peuvent être des photodiodes en HgCdTe (mercure-cadmium-tellure) de 25 x 25 µm déposées par hybridation sur un substrat de silicium.

Lorsque le miroir de balayage vertical associé, tel que le miroir 2, oscille autour d'un axe horizontal AA', l'image de hauteur h formée par le système de focalisation 3 est analysée ligne par ligne sur la barrette 4 par déplacement vertical selon une direction DV ; la largeur de cette image formée selon une direction DH perpendiculaire au plan de la figure 1 est la longueur L du détecteur 4.

Afin de fournir un signal vidéo reproduisant la scène observée ligne par ligne, les charges délivrées par les capteurs élémentaires, proportionnellement à l'éclairement reçu par chacun d'eux pendant une même durée, sont traitées dans un circuit de lecture qui effectue leur intégration, leur transfert et leur multiplexage grâce à des registres de lecture à décalage ; un tel circuit, de type à transfert de charge CCD (initiales de "Charge Coupled Device" en terminologie anglosaxonne) ou CMOS, est couplé à un registre de sortie pour délivrer, après amplification, le signal vidéo.

Pour respecter les conditions d'échantillonnage et de sensibilité exposées plus haut, les capteurs des barrettes de détection sont agencés selon plusieurs rangées définissant la structure du détecteur utilisé. De telles structures nécessitent l'élaboration de différentes commandes d'horloge pour l'intégration le transfert et le multiplexage des charges, pour chaque rangée.

La figure 2 représente un agencement entre les différents éléments matériels d'une caméra selon l'invention permettant de générer de telles commandes. Les différents signaux de commande d'horloge sont élaborés dans le plan du détecteur 20, confondu avec le plan focal du système optique de focalisation 3, par un séquenceur 22 comportant des moyens de comptage du temps pouvant être intégrés dans le circuit de lecture du détecteur 24 et pouvant être préréglés de l'extérieur du cryostat, à partir de signaux de synchronisation ligne et de fréquence d'échantillonnage d'un standard de télévision choisi provenant d'une mémoire externe 25. L'élaboration des signaux de commande d'horloges à l'intérieur du cryostat diminue également les bruits électriques des signaux, ce qui augmente la fiabilité de la commande.

Une électronique de proximité 26 comporte la mémoire 25 et une commande de sélection 27 de cette mémoire 25. La commande 27, actionnée à distance par un commutateur (non représenté), permet d'adapter les périodes d'intégration, les instants de transfert et de multiplexage des charges du circuit de lecture d'un détecteur de structure donnée au standard de visualisation désiré. L'invention assure cette compatibilité quel que soit le type d'organisation des rangées de capteurs élémentaires obtenu à partir des deux principaux types d'organisation illustrés ci-après et obéissant soit à la condition d'échantillonnage classique grâce à un décalage entre les rangées (organisation dite décalée), soit au mode de fonctionnement TDI par répétition sans décalage des rangées (organisation dite répétée).

Dans ces organisations, le nombre de rangées de capteurs peut être avantageusement grand pour les raisons exposées plus haut, et chaque rangée ayant sa propre période d'intégration, ses propres instants de transfert de charges entre les différentes capacités des registres de lecture, le nombre de signaux d'horloge à engendrer pour régler ces temps est très élevé. Ce nombre est de plus multiplié par le nombre de standards possible lorsque le détecteur est destiné à une l'utilisation multistandard visée par l'invention. L'invention permet de gérer de l'intérieur du cryostat un tel nombre de signaux d'horloge alors qu'une telle gestion était impossible lorsqu'il fallait générer tous ces signaux à partir de l'extérieur.

Les instructions de préréglage, relatives à la synchronisation ligne et à la fréquence d'échantillonnage d'un standard sélectionné par la commande 27, par exemple parmi les quatre standards étudiés plus loin, sont transmises par une liaison adaptée 28 de la mémoire 25, par exemple lors de la mise en route de la caméra, aux moyens de comptage programmées conformément à ces instructions. Les périodes d'intégration et de stockage intermédiaire des charges sont réglées en nombre de cycles par la fréquence d'échantillonnage et les instants d'intégration de transfert par la synchronisation ligne. Des premiers moyens de comptage 231 fournissent les impulsions de commande d'intégration et à des seconds moyens de comptage 232 réglés en fonction de la période d'intégration des charges, fournissant en fin de période d'intégration des charges les impulsions de commande de transfert.

Un exemple de réalisation de la caméra selon l'invention comporte un détecteur dont la structure est décrite ci-après : elle se compose d'une partie photosensible de rangées capteurs disposés en deux ensembles (ou blocs) décalés, comportant chacun 3 rangées alignées de 256 capteurs, combinant ainsi les deux types d'organisations principales, et d'une partie de traitement comprenant notamment des capacités d'intégration et de stockage intermédiaire des charges couplées aux moyens de comptage du temps. Ces moyens de comptage sont adaptés, d'une part, au nombre de capacités d'intégration et de stockage intermédiaire et, d'autre part, au type de standard, sélectionné par réglage des périodes d'intégration et de transfert en fonction des instructions de programmation comme décrit plus précisément ci-après.

En technologie hybride, les capteurs photosensibles, réalisés dans un matériau tel que Cd-Hg-Te, sont hybridés sur un substrat de silicium comportant les puits ou capacités d'intégration des charges, les puits ou capacités de stockage intermédiaires et les circuits de multiplexage, à travers des liaisons de transfert de charges effectuées par exemple par des fils de microsoudure ou des billes d'indium. En technologie monolithique, les capteurs, les puits ou capacités d'intégration et de stockage et les circuits de multiplexage sont intégrés dans le même substrat ; les puits de stockage des capacités forment les étages des registres de lecture, la lecture étant effectuée par transfert des charges d'un puits à l'autre.

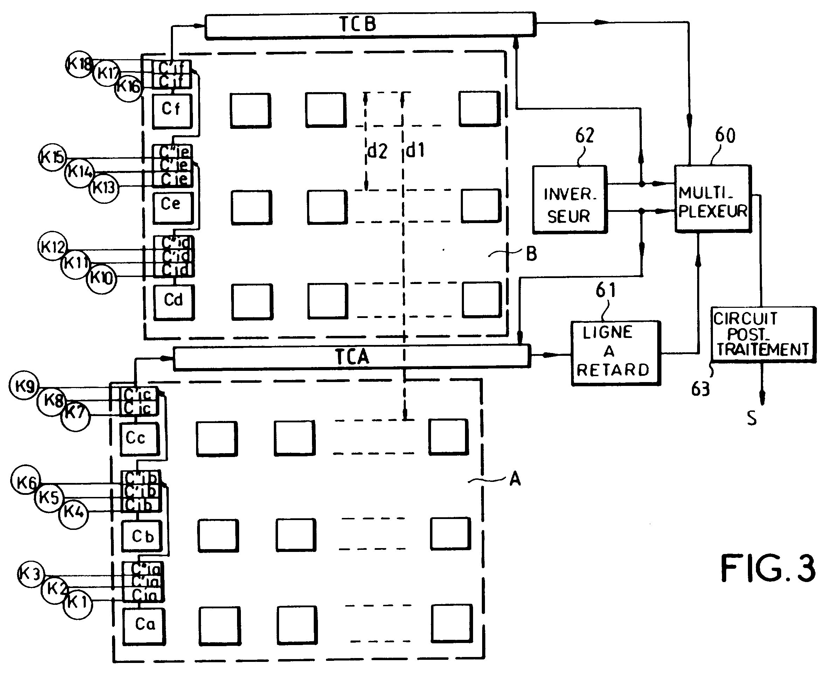

La figure 3 représente schématiquement l'agencement des capteurs et des capacités d'intégration et de stockage associées à ces capteurs selon l'exemple de réalisation. Cet agencement n'est que partiellement représenté pour alléger la figure, en particulier seules les capacités de stockage des premiers capteurs des rangées apparaissent.

Les capteurs forment deux blocs, A et B, décalés d'un pas égal à la dimension d'un capteur selon la direction horizontale définie par les rangées ; chaque bloc comprend 3 rangées alignées ayant chacune 256 capteurs. Les capteurs, de dimension 25 μm x 25 μm, forment 512 colonnes verticales de 3 capteurs décalées de 25 μm, ce qui impose 12,8 mm comme longueur de détecteur et donc comme largeur de l'image projetée sur ce détecteur.

Le pas d2 entre rangées non décalées d'un même bloc est de 62, 5 μm et le pas dl de décalage du bloc à bloc est de 175 μm.

Dans un même bloc, le stockage et les transferts des charges se font en mode TDI avec, comme décrit précédemment, accumulation des charges des capteurs d'une même colonne en synchronisme avec le balayage ligne à ligne de l'image sur le détecteur. Cette accumulation est effectuée dans les capacités intermédiaires. Sur la figure 3, chaque premier capteur des rangées, Ca, Cb ou Cc pour le bloc A et Cd, Ce ou Cf pour le bloc B est relié à une capacité d'intégration de charges, respectivement Cia, Cib, Cic, Cid, Cie ou Cif. Chaque capacité d'intégration Cia à Cif est couplée à deux capacités intermédiaires successives, respectivement C'ia et C"ia reliées à $C_{ia}$, C'ib et C"ib à $C_{ib}$, C'ic à C'if à $C_{if}$. Le rôle et le nombre de ces capacités intermédiaires sont décrits plus loin.

Les charges fournies par les capteurs sont stockées dans les capacités d'intégration puis transférées successivement dans les capacités intermédiaires. A la sortie de la dernière capacité intermédiaire, les charges d'un capteur sont cumulées à celles stockées dans les capacités intermédiaires du capteur de la même colonne situé immédiatement au-dessus, les capteurs ayant reçu le même flux de lumière selon le principe du TDI. Ainsi, sur la figure 3, la capacité $C"_{ia}$ est reliée à la capacité $C'_{ib}$, la capacité $C"_{ib}$ à la capacité $C'_{ic}$, la capacité $C"_{id}$ à la capacité $C'_{ie}$ et la capacité $C"_{ie}$ à la capacité $C'_{if}$.

Les rangées d'un même bloc fonctionnant en mode TDI sont équivalentes à une seule rangée-mère comme décrit plus loin. Les deux rangées-mères décalées ainsi formées fonctionnent selon un mode "décalage" qui consiste, comme décrit plus loin, à synchroniser les signaux issus des capteurs par des lignes à retard pour obtenir une séquence vidéo. De même, les signaux provenant d'une même colonne de capteurs dans l'exemple de réalisation présent, illustré à la figure 3, sont synchronisés après transmission à un registre de transfert de charges par bloc, TCA pour le bloc A et TCB pour le bloc B par une ligne à retard. Pour cela, les sorties des registres TCA et TCB sont reliées à un multiplexeur 60, à travers une ligne à retard 61 pour la sortie de TCA. Le multiplexeur et les sorties des registres TCA et TCB sont commandés par un inverseur 62 dont la cadence est réglée à partir de la fréquence d'échantillonnage. L'inverseur 62 permet la synchronisation, en alternance, des sorties des circuits TCA et TCB à une fréquence égale à la fréquence d'échantillonnage. Le multiplexeur 60 fournit le signal vidéo de sortie S après amplification et filtrage à travers un circuit de post-traitement 63.

Pour la gestion temporelle de ce détecteur, il est tout d'abord nécessaire de définir la succession dans le temps des périodes d'intégration et de transfert de charges dans les capacités, qui doit être commandée par les moyens de comptage, cette succession étant adaptée aux caractéristiques du standard sélectionné.

Ces commandes sont référencées de K1 à K18 dans l'exemple de la figure 3 limité aux premiers capteurs. Afin de faciliter le décompte des périodes de temps, il convient de distinguer deux types de commande : celles qui règlent les temps d'intégration des charges des capteurs $C_a$ à $C_f$ dans les capacités d'intégration $C_{ia}$ à $C_{if}$, respectivement les commandes K1, K4, K7, K10, K13 et K16 ; et celles qui règlent les instants de transfert entre les capacités intermédiaires $C_{ia}$ et $C'_{ia}$, $C'_{ia}$ et $C''_{ia}$, $C_{ib}$ et $C'_{ib}$, $C'_{ib}$ et $C''_{ib}$, $C_{ic}$ et $C'_{ic}$, $C'_{ic}$ et $C''_{ic}$, $C_{id}$ et $C'_{id}$, $C'_{id}$ et $C''_{id}$, $C_{ie}$ et $C'_{ie}$, $C'_{ie}$ et $C''_{ie}$, $C_{if}$ et $C'_{if}$, établis respectivement par les commandes K2, K3, K5, K6, K8, K9, K11, K12, K14, K15 et K17. Certaines commandes doivent gérer des transferts simultanés pour cumuler les charges selon le principe du TDI : il s'agit des commandes K5, K8, K14 et K17 qui règlent également et respectivement, outre les temps transferts déjà indiqués, ceux entre $C''_{ia}$ et $C'_{ib}$, $C''_{ib}$ et $C'_{ic}$, $C''_{id}$ et $C'_{ie}$, $C'_{ie}$ et $C'_{if}$.

Enfin des commandes gouvernent les instants de transfert des capacités intermédiaires vers les registres de transferts TCA et TCB : K9 entre $C'_{ic}$ et TCA et K18 entre $C'_{if}$ et TCB.

Dans l'exemple de réalisation, les commandes K1 à K18 sont, bien entendu, répétées 256 fois pour commander les transferts relatifs aux 256 colonnes du détecteur.

L'adaptation au standard de télévision sélectionné impose des temps d'intégration et des instants de transfert de charges pour les différentes commandes K1 à K18 répétées 256 fois. A titre d'exemple, ces valeurs de temps sont reproduites sur les chronogrammes 4a et 4b correspondant, respectivement, aux standards 625 lignes CCIR et 525 lignes US.

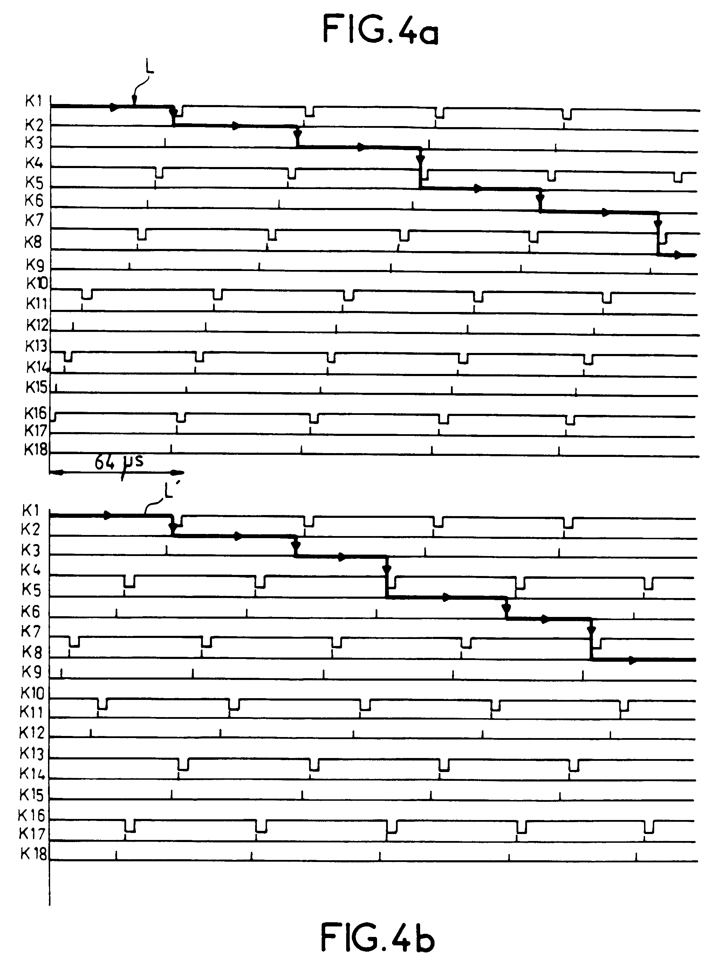

Que ce soit pour l'un ou l'autre de ces standards, l'intégration effective des charges est effectuée par les commandes K1, K4, K7, K10, K13 et K16 sur des durées égales à environ 60 µs, représentées sur les chronogrammes par le niveau haut des signaux de commande, séparés par des remises à zéro de 4 µs effectuées sur les niveaux bas ; par les autres commandes K2, K3, K5, K6, K8, K9, K11, K12, K14, K15, K17 et K18, sont commandés, à un rythme de 64 µs pour le standard CCIR et 63,49 µs pour le standard US, les transferts de charges entre capacités intermédiaires interconnectées. A titre d'exemple, les lignes fléchées L et L' sur les figures 4a et 4b indiquent la transmission dans le temps des charges provenant du capteur $C_a$ : ces lignes sont constituées d'une part de niveaux successifs qui indiquent les temps de stockage respectivement dans les capacités $C_{ia}$, $C'_{ia}$, $C''_{ia}$, $C'_{ib}$, $C''_{ib}$ et $C'_{ic}$, et d'autre part de fronts de descente, correspondant aux instants de transfert d'une capacité à l'autre. Les instants de début d'intégration des charges dans les capacités d'intégration, commandés par K4, K7, K10 et K16, sont décalés d'un standard à l'autre comme cela apparaît par comparaison entre les chronogrammes correspondants. Ce décalage est lié à la différence de vitesse de balayage entre les deux standards. Les valeurs de ces vitesses sont explicitées plus loin.

Le nombre de capacités intermédiaires nécessaires, et donc de commandes intermédiaires, ainsi que les valeurs du décalage temporel entre les différentes périodes de stockage des charges de chaque capteur, telles qu'illustrées sur les figures 4a et 4b, et du retard entre les blocs A et B introduit par la ligne à retard 61, sont calculés, en fonction des caractéristiques du standard, comme dans le cas des détecteurs à rangées de capteurs alignées, pour ce qui concerne les calculs relatifs à un même bloc, et comme dans le cas d'un détecteur à rangées décalées pour le calcul du retard entre bloc. Ces calculs sont justifiés plus loin.

A titre d'exemple pour les deux standards précédents, CCIR 625 lignes et US 525 lignes, les calculs du nombre de capacités intermédiaires, des valeurs de décalage temporel entre capteurs, et du retard entre blocs résultent des caractéristiques de base - hauteur d'image, distance entre lignes de trame, période ligne TV - dans le tableau I suivant :

TABLEAU IV

| STANDARD | CCIR 625 LIGNES | US 525 LIGNES |
|---|---|---|
| h = hauteur d'image 9, 6 mm pour une largeur d'image de 12,8 mm (format L4/3) | | |
| u = nombre de lignes utiles | 575 | 485 |
| Distance entre lignes dans une trame (µm) f = 2 x h/u | 33,39 | 39,6 |
| p = période ligne TV (µs) | 64 | 63,49 |
| Vitesse de balayage (m/s) v = f/p | 0,522 | 0,624 |
| d2 = pas des rangées (µm) | 62,5 | |
| Décalage temporel (µs) entre capteur (d2/v) | 119,73 | 100,16 |
| Nombre de capacités intermédiaires (d2/f) | 2 | 2 |
| d1 = pas entre blocs (µm) | 175 | |
| Retard (µs) entre blocs (d1/v) | 335,25 | 280,45 |

Les instants de début d'intégration et de transfert transmis aux capteurs, aux capacités et aux lignes à retard par les commandes du détecteur de la caméra multistandard selon l'invention, par exemple par les commandes K1 à K18 de l'exemple précédent, sont élaborées dans le plan du détecteur par un séquenceur comportant des moyens de comptage.

Selon un mode de réalisation, ces moyens de comptage se composent d'une première série de compteurs préréglables en fonction des caractéristiques du standard TV sélectionné -fréquence d'échantillonnage, synchronisation ligne - pour fournir les commandes des premières capacités d'intégration correspondantes. Les sorties de la première série de compteurs sont couplées à une seconde série de compteurs réglables en fonction de la période d'intégration des charges dans les capacités d'intégration.

Les périodes de temps sont comptabilisées en nombre de cycles d'horloge à partir de la valeur de la fréquence d'échantillonnage.

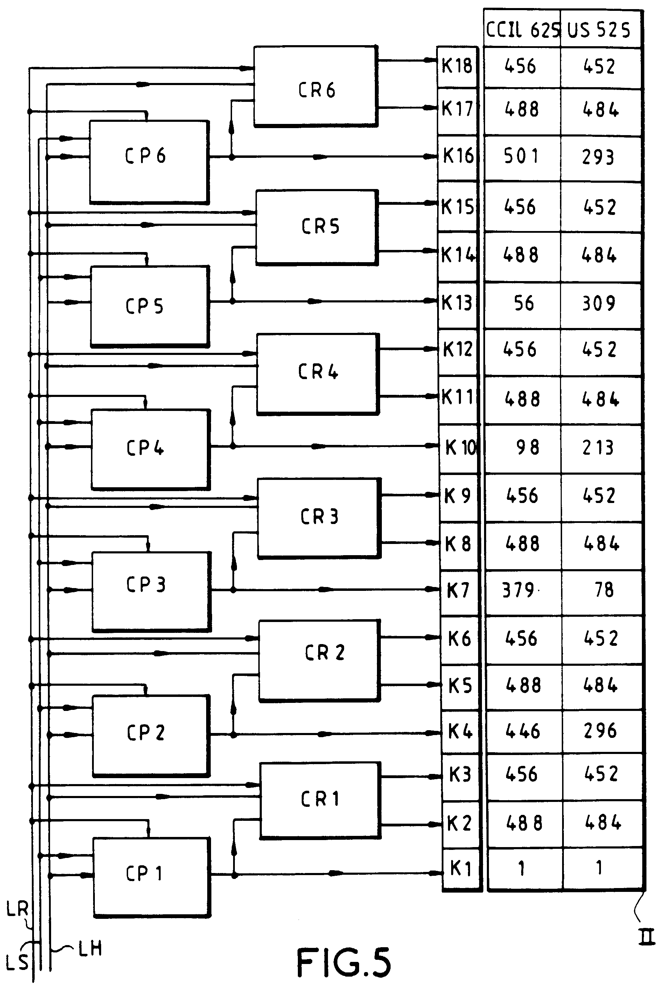

A titre d'exemple, la figure 5 illustre une structure élémentaire de compteurs programmables et réglables fournissant à partir d'une horloge à 8 MHz les commandes K1 à K18 des deux premières colonnes de capteurs du détecteur illustré sur la figure 3. Pour gérer l'ensemble du détecteur, il faut bien entendu répéter 256 fois une structure élémentaire.

Il comporte 6 premiers compteurs programmables CP1 à CP6 dont les sorties sont reliées respectivement aux entrées de 6 autres compteurs réglables, CR1 à CR6. Les instructions de réglage de comptage provenant de la mémoire extérieure (non représentée sur la figure 5) et correspondant aux caractéristiques du type de standard sélectionné, sont fournies aux compteurs par une ligne LR appartenant à une ligne bus. Les compteurs CP1 à CP6 reçoivent en entrée les tops d'impulsions de synchronisation ligne et les signaux d'horloge définissant la fréquence de comptage, à partir de lignes LS et LH appartenant également à la ligne bus. Les compteurs de la deuxième série, CR1 à CR6, sont reliés aux lignes LR et LH, pour intégrer la période d'intégration des charges du standard choisi.

Le comptage des cycles d'horloge par les compteurs CP1 à CP6 est commandé à partir des impulsions de synchronisation ligne fournies par LS, fonction de la vitesse de balayage, et le comptage des cycles d'horloge par les compteurs CR1 à CR6 est déclenché par les impulsions de sortie des compteurs CP1 à CP6.

A titre d'exemple, pour des fréquences d'horloge d'échantillonnage, telles que l'on ait 8 (soit 8 MHz pour l'horloge) ou 8,064 échantillons par microseconde, respectivement pour les standards CCIR 625 lignes ou US 525 lignes, le nombre de cycles d'horloge compté par chacun des compteur pour générer les commandes K1 à K18 et commandé par la ligne de réglage de comptage LR est indiqué dans le tableau II disposé en regard de ces commandes sur la figure 5. Les instants d'intégration et de transfert des charges sont alors ceux qui sont reportés sur les chronogrammes des figures 4a et 4b.

En sortie, les compteurs CP1 à CP6 transmettent les commandes d'intégration K1, K4, K7, K10, K13 et K16.

Les compteurs CR1 à CR6 ont chacun deux sorties qui fournissent, respectivement, les commandes de transfert K3 puis K2, K6 puis K5, K9 puis K8, K12 puis K11, K15 puis K14, K18 puis K17. Les commandes K2, K5, K8, K11, K14 et K17 déclenchent les transferts des charges des capacités d'intégration aux premières capacités intermédiaires, coïncidant avec les instants de cumul des charges des secondes capacités intermédiaires aux premières capacités intermédiaires de la rangée supérieure. Cette coïncidence ne concerne bien évidemment pas les charges des capteurs de la première rangée de chaque bloc. Les commandes K3, K6, K9, K12, K15 et K18, déclenchent les transferts des charges des premières capacités intermédiaires aux secondes capacités intermédiaires.

Les commandes de transfert ont pour période la période ligne, soit 63,49 µs pour le standard US et 64 µs pour le standard CCIR, la durée d'inté gration étant préréglée à 60 µs et à 59,51 µs selon le standard, CCIR 625 lignes et US 525 lignes. Les instants de transfert des charges entre les premières et les secondes capacités intermédiaires sont décalés dans le temps de la durée d'évacuation des charges des puits de stockage, classiquement égale à 4 µs, soit 32 cycles d'horloge dans l'exemple d'une fréquence d'échantillonnage de 8 MHz. Ce décalage temporel est relié entre les sorties des compteurs CR1 à CR6 par l'utilisation d'une ligne à retard intégrée dans chaque compteur réglable.

L'écart de 4 cycles entre les durées de stockage dans les capacités intermédiaires associées aux 2 standards de référence décrits provient de la différence de période ligne et donc de durée d'intégration de 0,51 µs.

Selon une autre réalisation, les moyens programmables sont constitués de mémoires à accumulation ou mémoires FIFO, initiales de First-In First-Out en terminologie anglo-saxonne. Les FIFO fournissent, par réglage adapté au standard à transmettre, les commandes d'intégration aux capacités d'intégration. Les sorties sont couplées à d'autres mémoires FIFO secondaires générant les commandes de transfert aux capacités intermédiaires.

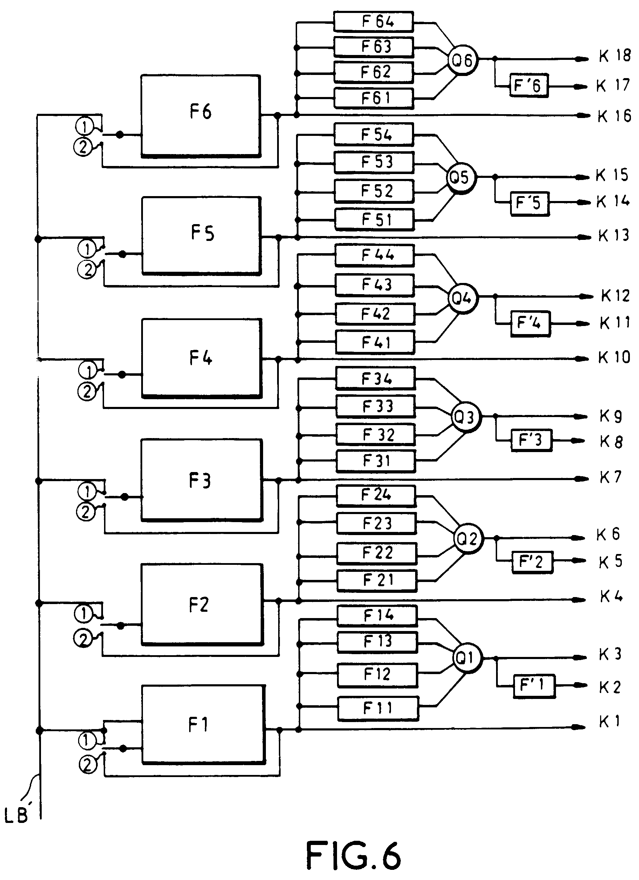

La figure 6 représente un exemple de mise en oeuvre de ces mémoires FIFO utilisées comme compteurs de temps réglables. Les débuts d'intégration des capacités d'intégration sont déterminés par 6 premières mémoires FIFO, F1 à F6, qui sont chargées à la mise en route de la caméra en fonction du choix du standard. Les FIFO sont rebouclées sur elles-mêmes en fonctionnement normal en réglant un commutateur d'entrée sur la position 2.

Les 6 FIFO délivrent les impulsions de début d'intégration des charges dans les capacités d'intégration dont la commande est assurée respectivement par K1, K4, K7, K10, K13 et K16.

Chaque mémoire F1 à F6 transmet également ses impulsions dans un groupe de 4 mémoires FIFO secondaires, montées en parallèle, $F_{i1}$ à $F_{i4}$ couplées à la sortie de la mémoire Fi, i variant de 1 à 6. Ces 6 groupes de 4 mémoires secondaires définissent 4 durées, commutables dans un commutateur, respectivement Q1 à Q6, pour fournir, en fonction du standard choisi par la commande externe, la durée d'intégration dans les capacités d'intégration. Les durées comptées par les mémoires FIFO secondaires correspondent aux transferts de charges des premières capacités intermédiaires vers les secondes, déclenchés par les commandes K3, K6, K9, K12, K15 et K18. Une dernière mémoire FIFO, F'1 à F'6, d'environ 32 cycles d'horloge, correspondant au temps d'évacuation des charges des capacités d'intégration, permet, en sortie de chaque commutateur Q1 à Q6, de délivrer une impulsion pour marquer l'instant de fin d'intégration et de transfert des charges vers les premières capacités intermédiaires. Ces transferts sont réglés en liaison avec les commandes K2, K5, K8, K11, K14 et K17.

L'invention s'applique également lorsque le détecteur est constitué de capteurs organisés selon l'un des deux types d'organisation connus, successivement décrits plus haut. Dans chacun de ces cas, le calcul des périodes d'intégration et des instants de transfert des charges se trouve explicité ci-après à partir des caractéristiques de ces organisations et de différents standards de télévision.

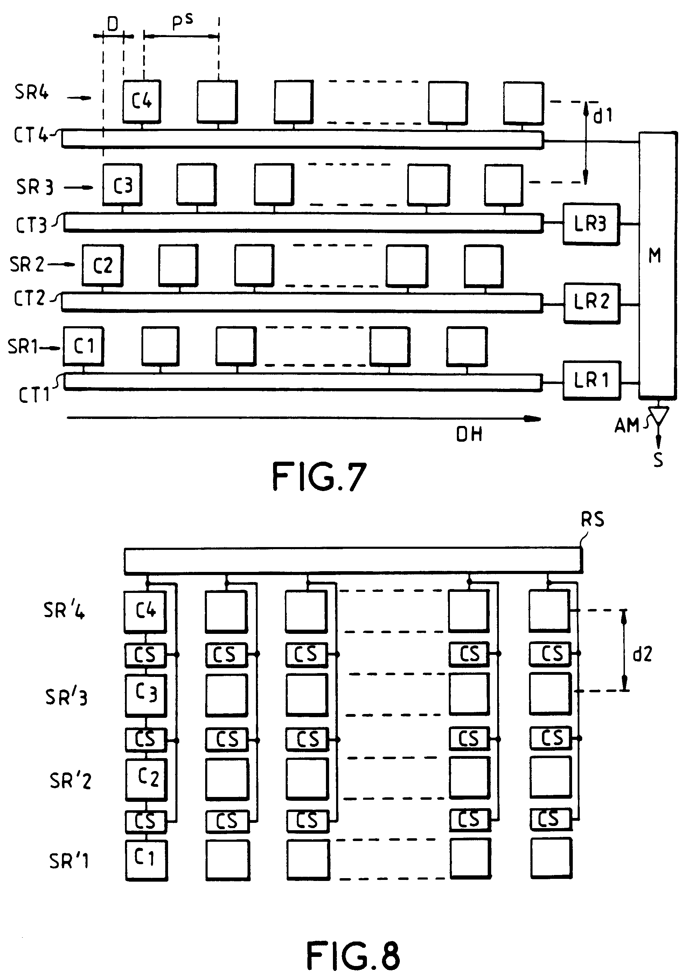

Sur la figure 7 est illustrée l'organisation dite décalée, les N capteurs élémentaires d'une barrette linéaire sont disposés en n rangées SR1, SR2, SR3 SRn, horizontalement décalées l'une par rapport à la suivante de D, les premiers capteurs de ces rangées étant référencés respectivement C1, C2, C3, ..., Cn. n est limité à 4 sur la figure 6 mais peut avoir une valeur supérieure. Chaque rangée se compose de N/n capteurs. Le décalage D selon la direction horizontale DH des sous-rangées est égal à une demi-longueur de capteur selon cette direction, de façon à respecter le théorème d'échantillonnage de Shannon. En effet, dans ces conditions, la fréquence d'échantillonnage du signal est égale au double de la fréquence de coupure spatiale liée à l'espacement des capteurs élémentaires.

La valeur du décalage D et le nombre n de rangées, conditionnent la valeur du pas ps entre capteurs d'une même rangée selon la direction DH, ps étant égal au produit de D par n. Un dernier paramètre $d_1$, pas entre les rangées selon la direction verticale DV perpendiculaire à DH, permet de caractériser l'organisation des capteurs en rangées décalées. Les capteurs d'une même rangée SRi, i variant de 1 à n, sont reliés aux entrées d'un registre de transfert de charges associé, respectivement CTi. Les registres de transfert sont reliés à un multiplexeur M via des lignes à retard LR1 à LRn$^{-1}$, soit LR1 à LR3 dans l'exemple illustré, couplés respectivement aux sorties des registres de transfert CT1 à CT3, la sortie du registre CT4 n'étant pas retardée.

Afin de reproduire ligne par ligne l'image formée par le système de focalisation sur le détecteur, les charges créées au niveau de chaque capteur élémentaire de chaque sous-rangée SRi, sont stockées, pendant des périodes de stockage adaptées à un standard de télévision, dans une capacité d'intégration, puis dans une capacité intermédiaire, avant d'être transmises au registre de transfert CTi associé à la rangée SRi correspondante. Les capacités (non représentées) sont, de manière connue, utilisées en technologie CMOS alors que la technologie CCD met en oeuvre des puits de stockage ; les flux d'entrée et de sortie sont commandés par des différences de potentiel adaptées.

Selon une variante, les charges, au lieu d'être transférées dans un registre de transfert, sont lues directement à l'aide d'un circuit de multiplexage.

La fréquence de lecture ou de transfert de charges est telle que, pendant la durée maximale d'une ligne d'image, les charges provenant d'une même rangée sont lues ou transférées. Cette règle de base d'adaptation au standard se retrouve pour toutes les formes d'organisation des capteurs.

Après multiplexage ou transfert dans chaque registre CTi, les signaux sont retardés dans la ligne à retard correspondante LRi, d'une durée établie de manière à synchroniser la suite des signaux correspondant à une même ligne d'image. Ainsi, via le multiplexeur final M, les signaux resynchronisés sont multiplexés pour fournir en sortie, après amplification via un amplificateur A, le signal vidéo S.

Le standard de télévision du moniteur de visualisation impose des valeurs de durée de stockage des charges dans les capacités de stockage et de durée de retard des signaux dans les lignes à retard. Les relations entre ces durées et le type de standard utilisé sont explicitées ci-après.

La figure 8 illustre un autre type d'organisation et traitement des signaux issus des capteurs visant à augmenter la sensibilité d'un détecteur à N capteurs. Selon cette organisation, les N capteurs associés à une ligne d'image sont repartis en k rangées de N/k capteurs, SR'1, SR'2 SR'k, k étant égal à quatre dans l'exemple illustré mais peut avoir une valeur nettement supérieure. Les rangées, dont seuls les premiers capteurs C1, C2, ...Ck sont référencés, sont alignées de manière répétitive et sont espacées verticalement d'un pas d2. Les capteurs forment donc N/k colonnes verticales de k capteurs chacune.

Afin d'augmenter la sensibilité du détecteur, les capteurs d'une même colonne sont classiquement reliés entre eux par l'intermédiaire de circuits d'intégration avec retard dits TDI, initiales de "Time Delay and Integration" en terminologie anglosaxonne, permettant de transférer les signaux issus de chaque capteur avec retard à un registre de sortie RS et de les cumuler, en synchronisme avec le balayage ligne.

Il est bien connu que globalement l'addition des signaux est linéaire et celle des bruits quadratique : le signal d'une même ligne d'image est donc amplifié dans le cas présent par un facteur k, alors que le bruit n'est multiplié que par $\sqrt{k}$ : dans ces conditions, le rapport signal à bruit, donc la sensibilité, est multiplié par $\sqrt{k}$.

Pratiquement, les charges libérées par chaque capteur d'une rangée SR'j, j variant de 1 à k, sont stockées via le circuit de traitement, dans une capacité d'intégration puis dans des capacités de stockage intermédiaires ; les charges contenues dans les capacités intermédiaires correspondant à la rangée SR'j sont cumulées aux charges des capacités intermédiaires correspondant aux capteurs de la même colonne de la sous-rangée SR'j + 1, en synchronisme avec le balayage vertical. Les périodes de stockage dans les capacités sont adaptées à ce synchronisme pour réaliser l'accumulation des charges transmises au registre de sortie RS, constitué par un registre de lecture à décalage ou un circuit de multiplexage.

Ce registre de sortie doit fournir un signal vidéo à une fréquence compatible avec le standard de télévision utilisé. Pour qu'il en soit ainsi, les périodes de stockage dans les capacités d'intégration et dans les capacités intermédiaires, ainsi que le nombre de capacités intermédiaires, sont calculés en adoptant la règle suivante, déjà citée : les charges contenues dans une capacité doivent être transférées avant qu'elle puisse être utilisée pour stocker d'autres charges, le transfert se faisant donc au rythme de la fréquence ligne.

Les deux types d'organisation précédentes requièrent, en ce qui concerne les périodes de stockage dans les capacités d'intégration, un même chronogramme de temps pour un standard donné. Par exemple, les périodes d'intégration des charges des premiers capteurs Cl à Cn ou C1 à Ck précédents, pour la formation successive de lignes d'image notées L1, L2, ... Lp, sont rassemblées dans le tableau III suivant en prenant k = n et en utilisant les notations suivantes : To est l'instant où débute l'intégration, $\Delta$Ti est la durée d'une intégration, d est le pas entre rangées (d = dl ou d2), f est le pas entre deux lignes d'image ; v est la vitesse verticale d'analyse d'image :

TABLEAU III

| Détecteur | Ligne d'image | Période d'intégration |
|---|---|---|
| C1 | | To, To + $\Delta$Ti |
| C2 | | To + d/v, To + d/v + $\Delta$Ti |
| | L1 | |
| Cn | | To + (n-1) d/v, To + (n-1) d/v + $\Delta$Ti |
| C1 | | To + f/v, To + f/v + $\Delta$Ti |
| | L2 | |
| Cn | | To + f/v + (n-1) d/v, To + f/v + (n-1) d/v + $\Delta$Ti |
| C1 | | To + (p-1) f/v, To + (p-1) f/v + $\Delta$Ti |
| | Lp | |
| Cn | | To + (p-1) f/v + (n-1) d/v, To + (p-1) f/v + (n-1) d/v + $\Delta$Ti |

Il ressort de ce tableau que les périodes d'intégration commencent et s'achèvent à des instants différents pour les différents capteurs, ce qui nécessite autant de commandes d'horloge que de capteurs. Ainsi, pour une même ligne L1, L2, ..., ou Lp, les charges des capteurs C1, C2, ..., sont intégrées et libérées des capacités d'intégration successivement avec un décalage temporel par capteur égal à d/v ; et pour chaque capteur C1, C2, ..., ou Cn, les périodes d'intégration correspondant aux lignes d'image successives L1, L2, ..., Lp, se succèdent dans le temps suivant des instants séparés par un décalage temporel par ligne, appelé ci-après période ligne, égal à f/v.

A titre d'exemple, quatre standards de référence, 625 lignes (CCIR), 525 lignes (US) 875 lignes et un autre standard de 525 lignes, sont définis par les valeurs des paramètres rassemblés dans le tableau IV suivant :

TABLEAU IV :

| Standard | 625 (CCIR) | 525 (US) | 875 | 525 |
|---|---|---|---|---|
| nombre de lignes par image | 625 | 525 | 875 | 525 |
| Fréquence trame (Hz) | 50 | 60 | 60 | 60 |
| Nombre de lignes utiles | 575 | 485 | 809 | 485 |
| Temps d'intégration Ti ($\mu$s) | 60 | 60 | 35 | 60 |

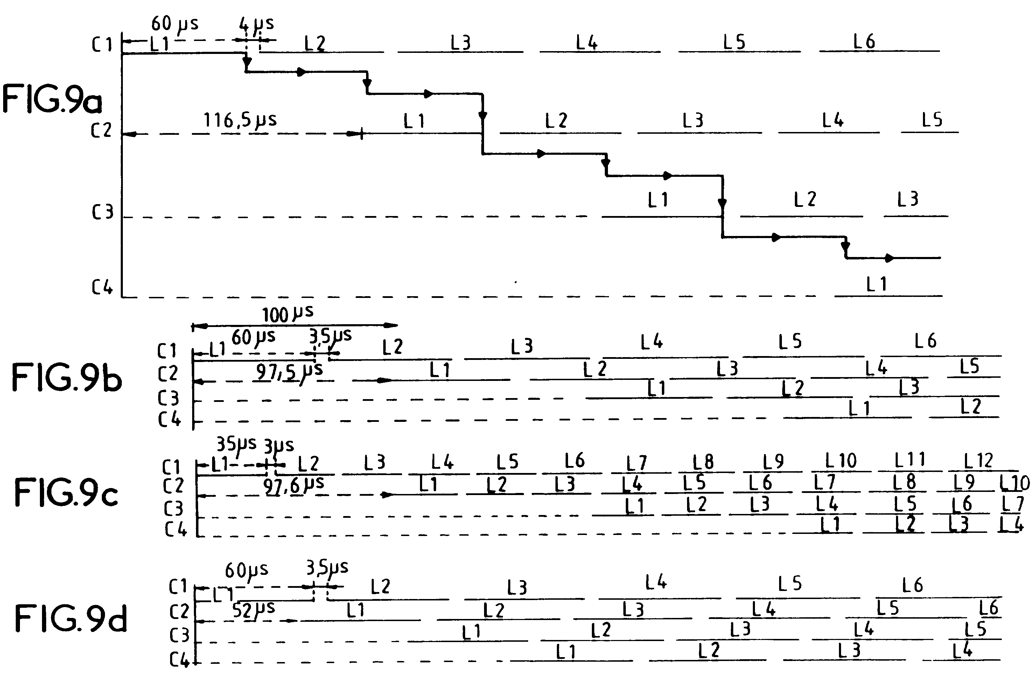

Les chronogrammes des figures 9a à 9d traduisent, respectivement pour les différents standards, l'étalement dans le temps des périodes d'intégration définies par le tableau I pour les premiers capteurs C1 à C4 d'un quelconque des deux types d'organisation décrits. Pour chaque capteur, les périodes d'intégration se succèdent dans le temps à des instants séparés par f/v correspondant à des lignes d'images successives L1, L2, L3, L4, L5, L6, etc...

Les chronogrammes 9a à 9d sont définis à partir des valeurs des décalages temporels d/v et f/v. Le décalage temporel (d/v) des périodes d'intégration d'un capteur à l'autre pour une même ligne d'image et le décalage temporel par ligne pour un même capteur (f/v) peuvent être calculés simplement à partir de quelques caractéristiques liées au standard de visualisation : la fréquence ligne $F_e$, la durée d'image $T_t$ (ou durée de trame, lorsque l'image est formée par entrelacement de deux trames selon des procédés classiques), et la hauteur h de l'image de format 4/3 formée sur le détecteur de longueur L (dans les exemples numériques, L = 15,36 mm et h = 11,52 mm valeurs classiques d'une caméra à balayage vertical développés par la Société T.R.T. à partir d'une barrette de 4 x 256 capteurs décalés). Ainsi, à partir de ces caractéristiques, il est possible de déduire immédiatement :

- la distance f entre deux lignes d'image $f = h/F_e \times F_t$, $F_{ex}T_t$ étant le nombre de lignes dans une image (ou dans une trame) égal à $F_e \times T_t$ ;
- la vitesse d'analyse $v = h/T_t$
- le décalage temporel par ligne ou période ligne f/v ;
- le décalage temporel par capteur d/v ;

Le tableau V donne les valeurs numériques de ces caractéristiques pour les différents standards, illustrées sur les chronogrammes 9a à 9d :

TABLEAU V

| Chronogramme | 9a | 9b | 9c | 9d |
|---|---|---|---|---|
| Standard | CCIR | US | 875 | 525 |
| Distance interligne | | | | |
| f ($\mu$m) | 16,5 | 19,5 | 11,7 | 19,5 |
| Vitesse d'analyse | | | | |
| v (m/Ls) | 0,26 | 0,31 | 0,31 | 1,31 |
| Distance d entre sous-rangée ($\mu$m) | 30 | 30 | 30 | 16 |
| f/v ($\mu$m) | 64 | 63,49 | 38,1 | 63,49 |
| Décalage temporel | | | | |
| d/v ($\mu$s) | 116,5 | 97,5 | 97,6 | 52 |

A la fin des périodes de stockage dans les capacités d'intégration, les charges sont transférées dans les capacités intermédiaires. Les durées de stockage dans les capacités intermédiaires obéissent à la règle d'occupation maximale de ces capacités pendant la durée d'une ligne d'image.

Afin de resynchroniser les signaux correspondants aux charges successivement libérées par les capacités d'intégration à la fréquence ligne du standard de visualisation, il est nécessaire d'adapter le nombre et la durée de stockage dans les capacités intermédiaires à ce standard.

La règle qui vient d'être rappelée et le type de standard imposent donc le nombre d'étages intermédiaires d'un type d'organisation donné :

- pour une organisation de type TDI, le nombre d'étages intermédiaires g, c'est-à-dire le nombre de capacités de stockage intermédiaires, est égal à l'entier immédiatement supérieur au rapport entre le décalage temporel des instants de transfert des charges intégrées d'un capteur au suivant pour former une même ligne et le décalage temporel d'une ligne d'image à la suivante.

$$g = (d2/v)/(f/v) = d2/f$$

Par exemple, pour les standards précédents, on obtient respectivement 2,2,3 et 1 capacités intermédiaires pour chaque capteur. Sur le chronogramme 9a, a été représentée une ligne pointillée et fléchée illustrant l'accumulation successive des charges provenant des capteurs C1 à C4 pour former le début de la première ligne L1 ; les parties horizontales correspondent aux durées stockages dans les capacités intermédiaires et les parties verticales marquent les instants de transfert ;

- pour une organisation du type à décalage telle qu'illustrée à la figure 7, la transmission des charges d'une même rangée de N/n capteurs est d'abord effectuée via le circuit de multiplexage et transfert du circuit de traitement associé, à une fréquence telle que, pendant la durée d'une ligne d'image, les charges des capteurs d'une même rangée sont multiplexées ou transférées.

Par exemple, la période de ligne étant de 64 μs et le nombre de capteurs par rangée de 704/4 = 176 dans le détecteur connu déjà cité de 704 capteurs et de 6,33 mm de long, la fréquence de multiplexage ou de transfert est de 176/64 = 2,75 MHz et la durée de multiplexage ou de transfert est de 64/176 = 0,36 μs. Les signaux sont ensuite retardés, comme décrit précédemment, dans les différentes lignes à retard LR1 à LR3 avant d'être multiplexés dans le multiplexeur M.

Le nombre d'étages intermédiaires à prévoir intervient au niveau de chaque ligne à retard dans cet exemple de réalisation à décalage. Ce nombre est égal à l'entier situé au plus près du rapport entre la durée de retard de la ligne à retard, égale au décalage temporel d'un capteur à l'autre, et la durée de transfert dans le circuit de multiplexage ou de transfert.

Ainsi, dans l'exemple précédent, appliqué au standard 625 CCIR dont le chronogramme est illustré à la figure 4a, les durées de retard sont, pour les lignes LR1 à LR3, respectivement de 349,5 μs, 233 μs et 116,5 μs et les nombres d'étages de 960 ; 640 et 320 pour un temps de transfert de 0,36 μs.

Il est à noter qu'une variante de réalisation de circuit de lecture semblable à la structure à retard et multiplexage décrite pour une organisation de type TDI est également possible pour effectuer le retard et le multiplexage des charges dans le cas d'une organisation de capteurs du type à rangées décalées.

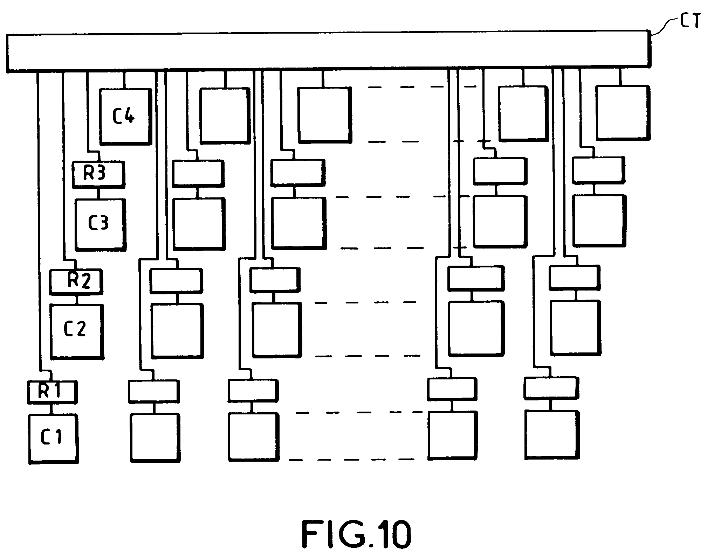

Une telle structure, illustrée sur la figure 10, comprend un unique circuit de transfert CT relié à tous les capteurs, tels que C1, C2, C3, C4, par l'intermédiaire de circuits à retard, tels que R1, R2, R3, pour les capteurs C1 à C3, introduisant respectivement les mêmes retards que les lignes à retard précédentes, à savoir dans l'exemple du standard 625 CCIR : 349,5 μs, 233 μs et 116,5 μs. Le nombre d'étages à prévoir dans ces circuits à retard, défini par l'entier le plus proche du rapport entre la durée de retard et la période ligne, est le même pour tous les circuits à retard reliés à une même rangée de capteurs. Par exemple, pour le standard 625 CCIR, il est respectivement de 6 ; 4 et 2 étages pour les rangées SR1 à SR3, avec une durée de ligne de 64 μs.

Ce dernier exemple de structure de circuit du lecture, pour réaliser le retard des charges d'un détecteur à rangées décalées diffère uniquement de la structure de gestion de type TDI par le nombre variable de capacités intermédiaires suivant la rangée.

L'invention s'applique non seulement aux capteurs à rangées décalées ou répétées, c'est-à-dire sans décalage, en particulier à un nombre de rangées supérieur à 4, mais également à des capteurs présentant plus généralement une combinaison des deux types d'organisation précédents, permettant de cumuler les avantages de chacun.

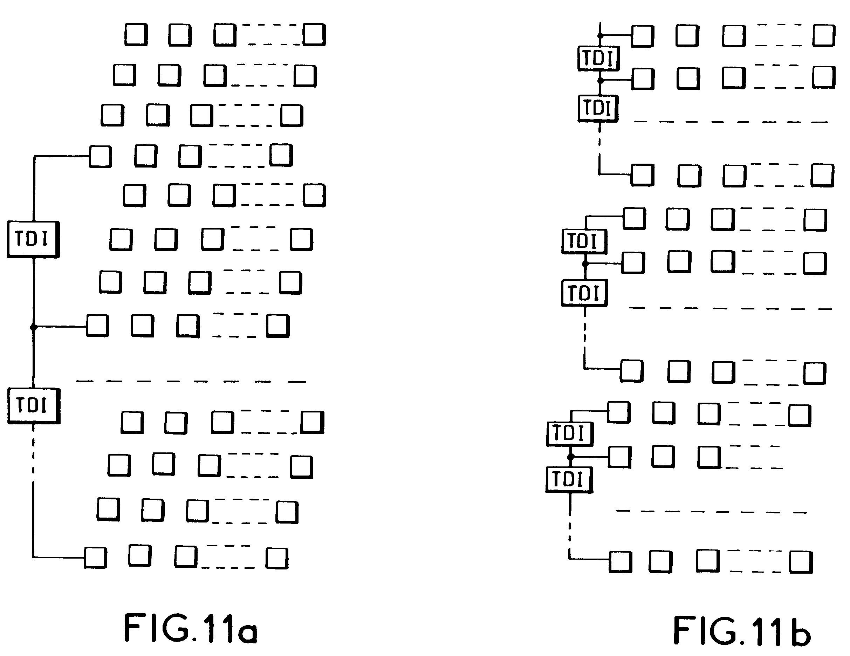

En fait, deux types d'organisation combinée, illustrés respectivement aux figures 11a et 11b sont possibles :

- celui où le motif des rangées décalées, du type illustré sur la figure 7, est répété n fois ; dans ce cas la distance d1, entre rangées décalées, est très inférieure à la distance d2, entre rangées alignées ;
- celui où le motif des rangées non décalées de la figure 8 est répété n fois avec, à chaque répétition, un décalage des rangées du type illustré à la figure 7 ; dans ce cas, la distance d2 est très inférieure à la distance d1.

Dans ces deux types de combinaison, les rangées alignées sont couplées à travers des capacités d'intégration et de stockage intermédiaire formant des circuits dits circuits TDI du fait de leur mode TDI de gestion dans le temps, comme précédemment décrit. Seuls les circuits TDI associés aux premiers capteurs alignés sont représentés sur les figures 11a et 11b afin de conserver leur lisibilité. Ces rangées peuvent être assimilées à une seule rangée-mère donnant un signal de niveau k fois plus élevé et un bruit de niveau multiplié par un facteur $\sqrt{k}$, à condition que le transfert des charges de ces rangées respecte les périodes d'intégration et de stockage dans les capacités intermédiaires correspondant au standard voulu, comme décrit précédemment.

Le traitement ultérieur entre les n rangées-mères décalées se fait selon l'une des deux réalisations précédemment décrites pour le traitement des charges issues de rangées de capteurs décalées, c'est-à-dire soit par transmission à n circuits à transfert de charges couplés à n-1 lignes à retard, soit par transmission à un seul circuit à transfert de charges par l'intermédiaire d'autant de circuits à retard que de capteurs, à l'exception bien entendu de ceux de la première rangée-mère.

## Revendications

1. Caméra d'observation multistandard comportant :

   - un détecteur (4) de longueur donnée, photosensible dans une bande spectrale donnée et comprenatn des capteurs élémentaires (C1, C2, C3, C4, ... ; Ca, Cb, Cc, Cd, Ce, Cf) disposés en rangées sur la longueur du détecteur (4) selon une même direction horizontale pour former une structure de type donné,
   - un système opto-mécanique de projection et de balayage (1 à 3), pour projeter une image d'une scène observée de largeur sensiblement égale à la longueur du détecteur (4), dans un plan focal coïncidant avec le plan du détecteur (20) et pour balayer cette image sur le détecteur (4) selon une direction verticale (DV),

- un cryostat (5) dans lequel sont disposés le détecteur (4) et, associé à celui-ci, un circuit de lecture (24) pour délivrer, à partir des charges libérées proportionnellement à l'éclairement reçu par les capteurs, puis transférées et multiplexées par la commande d'un séquenceur d'horloges en synchronisme avec le balayage vertical, un signal vidéo à un moniteur de visualisation ayant un standard de télévision donné, ce standard étant défini par une fréquence de lignes et pour la télévision numérique, par une fréquence d'échantillonnage caractéristique des images visualisées,

la caméra étant caractérisée en ce que le séquenceur d'horloges (22) est disposé dans le cryostat (5) et comporte des moyens de comptage programmables du temps (CP1 à CP6 ; CR1 à CR6 ; F1 à F6 ; F11 à F64 ; F'1 à F'6) pour définir des périodes d'intégration des charges et des instants de transfert et de multiplexage de ces charges après intégration dans le circuit de lecture (24), et en ce que ces moyens de comptage sont préréglés par une mémoire (25) disposée à l'extérieur du cryostat (5) et qui contient des instructions de synchronisation des périodes d'intégration, des instants de transfert et de multiplexage avec la fréquence ligne d'un standard de télévision choisi parmi plusieurs standards présélectionnés dans la mémoire et correspondant au standard du moniteur de visualisation.

2. Caméra d'observation selon la revendication 1, caractérisée en ce que les moyens de comptage comprennent une première série de compteurs programmables (CP1 à CP6) pour définir des instants de début d'intégration des charges dans des capacités d'intégration ($C_{ia}$ à $C_{if}$), chaque compteur programmable étant couplé à un compteur réglable (CR1 à CR6), les compteurs réglables formant une deuxième série de compteurs définissant les périodes d'intégration des charges dans les capacités d'intégration ($C_{ia}$ à $C_{if}$) et les instants de transfert dans des capacités intermédiaires ($C'_{ia}$ à $C'_{if}$ ; $C''_{ia}$ à $C''_{if}$), les compteurs de la deuxième série (CR1 à CR6) étant commandés dans le temps par les sorties respectives des compteurs de la première série (CP1 à CP6).

3. Caméra d'observation selon la revendication 1, caractérisé en ce que les moyens de comptage comprennent une première série de mémoires FIFO (F1 à F6), chaque mémoire FIFO étant couplée respectivement à un groupe de mémoires FIFO secondaires (F11 à F14 ; F21 à F24 ; F31 à F34 ; F41 à F44 ; F51 à F54 ; F61 à F64), la première série de mémoires FIFO (F1 à F6) définissant les instants de début d'intégration des charges dans des capacités d'intégration ($C_{ia}$ à $C_{if}$) et les groupes de mémoires FIFO secondaires formant une seconde série de mémoires FIFO, chaque mémoire FIFO secondaire étant rechargeable pour fournir, en fonction du standard de visualisation choisi, une période d'intégration dans des capacités intermédiaires ($C'_{ia}$ à $C'_{if}$ ; $C''_{ia}$ à $C''_{if}$), les mémoires FIFO secondaires de la deuxième série étant déclenchées par les sorties respectives des mémoires FIFO de la première série.

4. Caméra d'observation selon l'une des revendications précédentes, dans laquelle les capteurs élémentaires du détecteur (4) sont organisés selon plusieurs rangées décalées (SR1 à SR4) de manière à satisfaire à la condition d'échantillonnage.

5. Caméra d'observation selon l'une des revendications 1 à 3, dans laquelle les capteurs élémentaires du détecteur (4) sont organisés selon plusieurs rangées non décalées (SR'1 à SR'4) de manière à fonctionner en mode TDI.

6. Caméra d'observation selon l'une des revendications 1 à 3, dans laquelle des capteurs élémentaires du détecteur (4) sont organisés en blocs décalés (A ; B) de rangées non décalées.

7. Caméra d'observation selon l'une des revendications 1 à 3, dans laquelle les capteurs élémentaires du détecteur (4) sont organisés en blocs non décalés de rangées décalées.

8. Système de surveillance équipé d'une caméra selon l'une des revendications précédentes.

**Patentansprüche**

1. Mehrnormen-Beobachtungskamera mit:

- einem Detektor (4) gegebener Länge, der in einem gegebenen Spektralband lichtempfindlich ist und elementare Sensoren (C1, C2, C3, C4,...; Ca, Cb, Cc, Cd, Ce, Cf) enthält, die in Reihen über die Länge des Detektors (4) in der gleichen horizontalen Richtung zur Bildung einer Struktur gegebener Art angeordnet sind,

- einem optomechanischen Projektions- und Abtastsystem (1 bis 3), um ein Bild einer beobachteten Szene, dessen Breite im wesentlichen gleich der Länge des Detektors (4) ist, in eine Brennebene zu projizieren, die mit der Detektorebene (20) zusammenfällt, um dieses Bild auf dem Detektor (4) in einer vertikalen Richtung (DV) abzutasten,

- einem Kryostat (5), in welchem der Detektor (4) und, in Zuordnung zu diesem, eine Leseschaltung (24) angeordnet sind, um aufgrund der Ladungen, die proportional zu der von den Sensoren empfangenen Belichtung freigesetzt und dann durch die Steuerung einer Taktablaufsteuereinrichtung synchron mit der Vertikalabtastung übertragen und multiplexiert worden sind, ein Videosignal zu einem Anzeigemonitor zu liefern, der eine gegebene Fernsehnorm hat, die durch eine Zeilenfrequenz und für das digitale Fernsehen durch eine charakteristische Abtastfrequenz für die angezeigten Bilder definiert ist,

wobei die Kamera dadurch gekennzeichnet ist, daß die Taktablaufsteuereinrichtung (22) im Kryostat (5) angeordnet ist und programmierbare Zeitzähleinrichtungen (CP1 bis CP6; CR1 bis CR6; F1 bis F6; Fll bis F64; F'1 bis F'6) enthält, um Integrationsperioden für die Ladungen und Zeitpunkte für die Übertragung und Multiplexierung dieser Ladungen nach der Integration in der Leseschaltung (24) zu definieren, und daß die Zähleinrichtungen durch einen Speicher (25) voreingestellt werden, der im Inneren des Kryostats (5) angeordnet ist und Befehle zur Synchronisation der Integrationsperioden sowie der Übertragungs- und Multiplexierungszeitpunkte mit der Zeilenfrequenz einer Fernsehnorm enthält, die aus mehreren im Speicher vorgewählten Normen ausgewählt ist und der Norm des Anzeigemonitors entspricht.

2. Beobachtungskamera nach Anspruch 1, dadurch gekennzeichnet, daß die Zähleinrichtungen eine erste Folge von programmierbaren Zählern (CP1 bis CP6) zur Definition von Zeitpunkten des Beginns der Integration der Ladungen in Integrationskapazitäten ($C_{ia}$ bis $C_{if}$) enthält, wobei jeder programmierbare Zähler mit einem einstellbaren Zähler (CR1 bis CR6) verbunden ist, wobei die einstellbaren Zähler eine zweite Folge von Zählern bilden, die die Perioden der Integration der Ladungen in den Integrationskapazitäten ($C_{ia}$ bis $C_{if}$) und die Zeitpunkte der Übertragung in Zwischenkapazitäten ($C'_{ia}$ bis $C'_{if}$; $C_{ia}$ bis $C_{IF}$) definieren, wobei die Zähler der zweiten Folge (CR1 bis CR6) durch die jeweiligen Ausgänge der Zähler der ersten Folge (CP1 bis CP6) zeitlich gesteuert werden.

3. Beobachtungskamera nach Anspruch 1, dadurch gekennzeichnet, daß die Zähleinrichtungen eine erste Folge von FIFO-Speichern (F1 bis F6) enthalten, wobei jeder FIFO-Speicher mit einer Gruppe von sekundären FIFO-Speichern (F11 bis F14; F21 bis F24; F31 bis F34; F41 bis F44; F51 bis F54; F61 bis F64) verbunden ist, wobei die erste Folge von FIFO-Speichern (F1 bis F6) die Zeitpunkte des Beginns der Integration der Ladungen in Integrationskapazitäten ($C_{ia}$ bis $C_{if}$) definiert und die Gruppen von sekundären FIFO-Speichern eine zweite Folge von FIFO-Speichern bilden, wobei jeder sekundäre FIFO-Speicher wiederaufladbar ist, um in Abhängigkeit von der gewählten Fernsehnorm eine Periode der Integration in Zwischenkapazitäten ($C'_{ia}$ bis $C'_{if}$; $C''_{ia}$ bis $C''_{if}$) zu liefern, wobei die sekundären FIFO-Speicher der zweiten Folge durch die jeweiligen Ausgänge der FIFO-Speicher der ersten Folge ausgelöst werden.

4. Beobachtungskamera nach einem der vorhergehenden Ansprüche, in welcher die elementaren Sensoren des Detektors (4) in mehreren versetzten Reihen (SR1 bis SR4) organisiert sind, so daß sie die Abtastbedingung erfüllen.

5. Beobachtungskamera nach einem der Ansprüche 1 bis 3, in welcher die elementaren Sensoren des Detektors (4) in mehreren nicht versetzten Reihen (SR'1 bis SR'4) organisiert sind, so daß sie im TDI-Modus arbeiten.

6. Beobachtungskamera nach einem der Ansprüche 1 bis 3, in welcher die elementaren Sensoren des Detektors (4) in versetzten Blöcken (A; B) von nicht versetzten Reihen organisiert sind.

7. Beobachtungskamera nach einem der Ansprüche 1 bis 3, in welcher die elementaren Sensoren des Detektors (4) in nicht versetzten Blöcken von versetzten Reihen organisiert sind.

8. Beobachtungssystem, das mit einer Kamera nach einem der vorhergehenden Ansprüche ausgestattet ist.


**Claims**

1. Multi-standard observation camera comprising:

- a detector (4) of given length and photosensitive over a given spectral band and including elementary sensors (C1, C2, C3, C4, ...; Ca, Cb, Cc, Cd, Ce, Cf) organized in horizontal rows along the length of detector (4) to form a given type of structure,
- an optomechnical projection and scanning system (1 to 3) to project an image of a scene observed, the image width being virtually equal to the length of the detector (4), onto a focal plane coinciding with the plane of the detector (20) and to scan this image over the detector (4) in a vertical direction (DV),
- a cryostat (5) which contains the detector (4) and, associated with the latter a read circuit (24) for outputting, using the charges liberated in proportion to the illumination received by the sensors, then transferred and multiplexed under the control of a clock sequencer in synchronization with the vertical scan, a video signal to a display monitor having a given television standard, this standard being defined by a line frequency and, in the case of digital television, by a sampling frequency characteristic of the images displayed.

the camera being characterised in that the clock sequencer (22) is placed in the cryostat (5) and includes programmable time-counting means (CP1 to CP6, CR1 to CR6, F1 to F6, F11 to F64 and F'1 to F'6) to define the periods over which the charges are integrated and the instants at which these charges are transferred and multiplexed, after integration, into the read circuit (24), in that these counting means are preset by a memory (25) placed outside the cryostat (5), the memory containing instructions to synchronize the integration periods and transfer and multiplexing instants with the line frequency of a television standard chosen from several standards preselected in the memory and corresponding to the display monitor standard.

2. Observation camera according to Claim 1, characterised in that the counting means include a first series of programmable counters (CP1 to CP6) which define the instants at which charge integration in the integration capacitors ($C_{ia}$ to $C_{if}$) begins, each programmable counter being coupled to an adjustable counter (CR1 to CR6), the adjustable counters forming a second series of counters which define the periods during which charges are integrated in the integration capacitors ($C_{ia}$ to $C_{if}$) and the instants of transfer into the intermediate capacitors ($C'_{ia}$ to $C'_{if}$; $C''_{ia}$ to $C''_{if}$), this second series of counters (CR1 to CR6) being controlled, in time, by the respective outputs from the first series (CP1 to CP6).

3. Observation camera according to Claim 1, characterised in that the counting means comprise a first series of FIFO memories (F1 to F6), each FIFO memory being coupled to a group of secondary FIFO memories (F11 to F14; F21 to F24; F31 to F34; F41 to mF44; F51 to F54 and F61 to F64) respectively, the first series of FIFO memories (F1 to F6) defining the instants at which charge integration in the integration capacitors ($C_{ia}$ to $C_{if}$) begins and the groups of secondary FIFO memories forming a second series of FIFO memories, each secondary FIFO memory being reloadable to deliver, as appropriate to the selected display standard, a period for integration in the intermediate capacitors ($C'_{ia}$ to $C'_{if}$; $C''_{ia}$ to $C''_{if}$), the secondary FIFO memories of the second series being triggered by the respective outputs from the first series of FIFO memories.

4. Observation camera according to any one of the previous claims, in which the elementary sensors of the detector (4) are organized into several offset rows (SR1 to SR4) to satisfy the sampling condition.

5. Observation camera according to one of Claims 1 to 3, in which the elementary sensors of the detector (4) are organized into several non-offset rows (SR'1 to SR'4) to operate in the TDI mode.

6. Observation camera according to one of Claims 1 to 3, in which the elementary sensors of the detector (4) are organized into offset blocks (A;B) of non-offset rows.

7. Observation camera according to one of Claims 1 to 3, in which the elementary sensors of the detector (4) are organized into non-offset blocks of offset rows.

8. Surveillance system equipped with a camera according to one of the preceding claims.

FIG.1

SÉQUENCEUR

FIG.2

FIG.3

EP 0 575 220 B1

# FIG.4a

# FIG.4b

|  | CCIL 625 | US 525 |
|---|---|---|
| K18 | 456 | 452 |
| K17 | 488 | 484 |
| K16 | 501 | 293 |
| K15 | 456 | 452 |
| K14 | 488 | 484 |
| K13 | 56 | 309 |
| K12 | 456 | 452 |
| K11 | 488 | 484 |
| K10 | 98 | 213 |
| K9 | 456 | 452 |
| K8 | 488 | 484 |
| K7 | 379 | 78 |
| K6 | 456 | 452 |
| K5 | 488 | 484 |
| K4 | 446 | 296 |
| K3 | 456 | 452 |
| K2 | 488 | 484 |
| K1 | 1 | 1 |

FIG.5

# FIG.6

FIG.7

FIG.8

**FIG.9a**

60 µs   4 µs

C1  L1   L2   L3   L4   L5   L6

116,5 µs

C2   L1   L2   L3   L4   L5

C3   L1   L2   L3

C4   L1

**FIG.9b**

100 µs

60 µs   3,5µs

C1  L1   L2   L3   L4   L5   L6

97,5 µs

C2   L1   L2   L3   L4   L5

C3   L1   L2   L3

C4   L1   L2

**FIG.9c**

35µs  3µs

C1  L1   L2   L3   L4   L5   L6   L7   L8   L9   L10   L11   L12

97,6 µs

C2   L1   L2   L3   L4   L5   L6   L7   L8   L9   L10

C3   L1   L2   L3   L4   L5   L6   L7

C4   L1   L2   L3   L4

**FIG.9d**

60µs   3,5µs

C1  L1   L2   L3   L4   L5   L6

52µs

C2   L1   L2   L3   L4   L5   L6

C3   L1   L2   L3   L4   L5

C4   L1   L2   L3   L4

EP 0 575 220 B1

FIG.10

FIG.11b

FIG.11a